Europäisches Patentamt

European Patent Office

Office européen des brevets

(11) Veröffentlichungsnummer: **0 308 657**
**A1**

## EUROPÄISCHE PATENTANMELDUNG

(21) Anmeldenummer: 88113570.1

(51) Int. Cl.4 **A22C 25/14**

(22) Anmeldetag: **20.08.88**

(30) Priorität: **21.09.87 DE 8712702 U**

(43) Veröffentlichungstag der Anmeldung:
**29.03.89 Patentblatt 89/13**

(84) Benannte Vertragsstaaten:
**BE DE ES FR GB NL SE**

(71) Anmelder: **NORDISCHER MASCHINENBAU
RUD. BAADER GMBH + CO KG
Geniner Strasse 249
D-2400 Lübeck(DE)**

(72) Erfinder: **Gütte, Ulrich, Dipl.-Ing.
Poggenbreeden 42
D-2060 Bad Oldesloe(DE)**
Erfinder: **Holzhüter, Andreas, Dipl.-Phys.
Moislinger Allee 84
D-2400 Lübeck(DE)**

(54) Einrichtung zum Entfernen von Fehlstellen bei Fischfilets.

(57) Die Erfindung betrifft eine Einrichtung zum Entfernen von Fehlstellen bei Fischfilets, wie insbesondere Parasiten (Nematoden). Kennzeichen dieser Einrichtung ist eine die rotierend angetriebene und mit einer Vakuumquelle in Verbindung stehende Saugpipette 5 , die in den Bereich der Fehlstelle gebracht wird.

Fig.1

EP 0 308 657 A1

## Einrichtung zum Entfernen von Fehlstellen bei Fischfilets

Die Erfindung betrifft eine Einrichtung zur örtlichen Bearbeitung von Fischfilets, insbesondere zum Entfernen von Fehlstellen, wie Blutflekken,Parasiten (Nematoden) u.ä. unter Einsatz von Vakuum, welches über eine Saugpipette in den Bereich der Fehlstelle gebracht wird.

Eine derartige Einrichtung ist aus der GB-PS 833 422 bekannt. Diese offenbart eine Saugpipette mit einem dünnwandigen Röhrchen, welches an seinem freien Ende eine Ringschneide aufweist und mit einer in seiner Innenbohrung umlaufend gelagerten, an ihrem freien Ende mit einer Stirnschneide versehenen Förderschnecke ausgestattet ist. deren Förderraum mit einem Vakuumanschluß in Verbindung steht, und welche über eine biegsame Welle umlaufend angetrieben ist.

Beim Einsatz dieser Einrichtung zum Entfernen von unter der Oberfläche im Fleisch der Fischfilets liegenden Fehlstellen in Form von Einschlüssen wie Nematoden, entsteht ein von der Oberfläche bis zu der Einschlußstelle verlaufender Kanal. Neben der damit verursachten Qualitätsminderung aufgrund der unschönen Optik bedeutet dies einen Verlust an wertvollem Filetfleisch, der nicht akzeptabel ist.

Es ist daher die Aufgabe der Erfindung, diesen Ausbeuteverlust zu vermeiden.

Diese Aufgabe wird erfindungsgemäß dadurch gelöst, die Saugpipette als rotierend angetriebenes, an sei nem freien Ende geschlossenes Röhrchen mit mindestens einer seitlichen Saugöffnung in der Nähe dieses Endes ausgebildet ist.- Eine derartige Saugpipette ist in der Lage, in das Fleisch unter Verdrängen der Muskelfasern einzudringen und bis zu der Fehlstelle zu gelangen, ohne Fleischteile abzulösen, andererseits aber mit dem Fleisch nicht verbundene, freie Einlagerungen wie Nematoden und deren Stoffwechselprodukte abzusaugen. Aufgrund der weichen Konsistenz des Fleisches ist daher die Eindringstelle nach Rückzug der Saugpipette nicht mehr erkennbar.

Weitere vorteilhafte Ausführungsmerkmale finden sich in den Unteransprüchen.

Die Erfindung wird nachfolgend anhand in der Zeichnung dargestellter Ausführungsbeispiele näher erläutert. Es zeigt

Fig.1 eine axonometrische Darstellung des Handhabungsteils der erfindungsgemäßen Einrichtung,

Fig.2,3 und 4 verschiedene Gestaltungsmerkmale des Röhrchens der Saugpipette im Bereich ihres freien Endes.

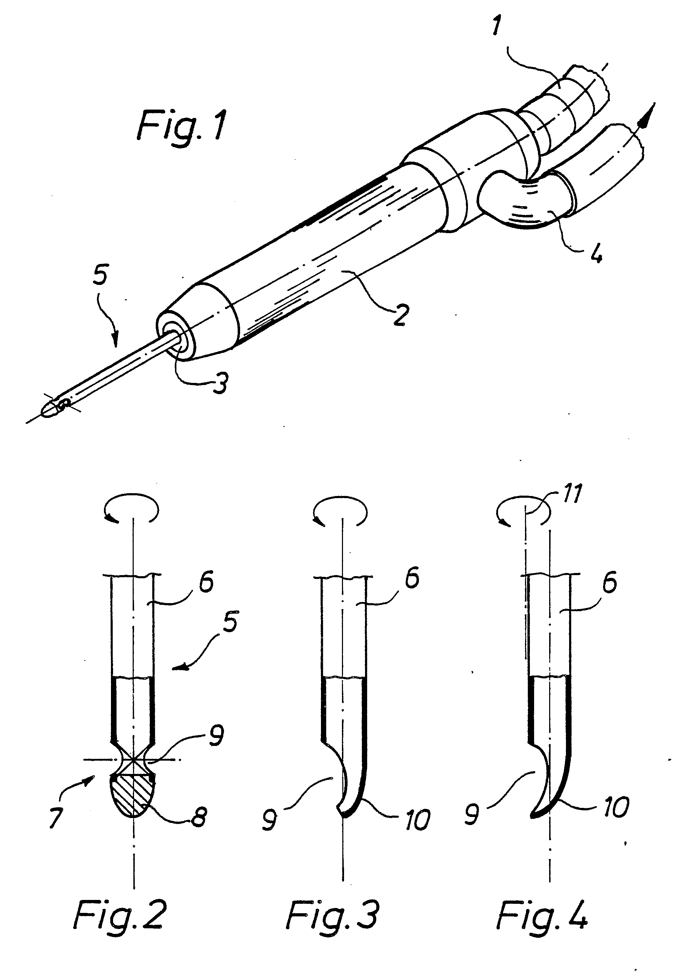

Die Einrichtung besteht im wesentlichen aus einem nicht gezeigten Antriebsmotor für eine biegsame Welle 1 und einer geeigneten, ebenfalls nicht gezeigten Vakuumquelle. Die biegsame Welle 1 mündet an ihrem freien Ende in ein Handstück 2, in welchem in üblicher Weise eine Lagerung für eine Aufnahme 3 für das Bearbeitungswerkzeug vorgesehen ist. Das Handstück 2 hat dabei eine innere Gestaltung, die eine Verbindung des Zentrums der Aufnahme 3 mit der Vakuumquelle über einen Sauganschluß 4 an dem dem Antriebsmotor zuweisenden Ende des Handstücks 2 ermöglicht. Das in der Aufnahme 3 einzusetzende Bearbeitungswerkzeug ist als Saugpipette 5 ausgebildet und aus einem dünnwandigen Röhrchen 6,welches gemäß Figuren 1 und 2 an seinem freien Ende 7 mittels eines Stopfens 8 verschlossen ist und eine durchgehende Querbohrung als Saugöffnung 9 aufweist. Bei der in Fig.3 gezeigten Ausführung ist das Röhrchen 6 der Saugpipette 5 an seinem freien Ende 7 durch einen Schrägschnitt seitlich geöffnet und der stehengebliebene Teil 10 nach innen gebogen. Die Ausführung gemäß Fig.4 ist in gleicher Weise entstanden, wobei der Teil 10 bis an das exzentrische Drehzentrum 11 eingebogen wurde.

Die Wirkungsweise der Einrichtung ist folgende:

Bei der Filetproduktion wird üblicherweise als abschließender Arbeitsgang eine Qualitätskontrolle durchgeführt, bei welcher die Filets auf Fehlstellen untersucht werden, die durch Schnittfehler oder allgemeine unsachgemäße Behandlung verursacht sein können, aber auch naturgegeben vorliegen können, wie das beispielsweise bei in dem Fleisch eingeschlossenen Nematoden der Fall ist. Die Qualitätskontrolle insbesondere darauf erfolgt dabei üblicherweise auf Leuchttischen, auf welchen die Einschlüsse sichtbar werden. Dieser Arbeitsplatz ist das Einsatzfeld der erfindungsgemäßen Einrichtung. Ist eine solche Fehlstelle entdeckt, so wird die Saugpipette 5 unter Rotation, die zweckmäßigerweise über einen Fußschalter bei Bedarf initiiert wird, durch das Fleisch bis an die erkannte Fehlstelle herangeführt. Ist diese Fehlstelle durch, Nematoden verursacht, so trifft die Saugpipette 5 auf eine von der Nematode erzeugte Kaverne, wobei aufgrund der Rotation in Verbindung mit dem kräftigen Vakuum das Loslösen der Nematode und Absaugen derselben mitsamt den in der Kaverne befindlichen Stoffwechselprodukten erfolgt.

Mit dem erfindungsgemäßen Bearbeitungswerkzeug gelingt es, die Kaverne praktisch ohne Abtrennen von Fleischteilen zu erreichen, weshalb nach Herausziehen der Saugpipette 5 am Filet keine sichtbare Beschädigung verbleibt.

**Ansprüche**

1. Einrichtung zur örtlichen Bearbeitung von Fischfilets insbesondere zum Entfernen von Fehlstellen wie Blutflecken, Parasiten (Nematoden) u.ä. unter Einsatz von Vakuum, welches über eine Saugpipette in den Bereich der Fehlstelle gebracht wird, **dadurch gekennzeichnet,** daß die Saugpipette (5) als rotierend angetriebenes, an seinem freien Ende (7) geschlossenes Röhrchen (6) mit mindestens einer seitlichen Saugöffnung (9) in der Nähe dieses Endes (7) ausgebildet ist.

2. Einrichtung nach Anspruch 1, **dadurch gekennzeichnet,** daß die Saugpipette (5) in ein Handstück (2) einer biegsamen Welle (1) eingespannt ist.

3. Einrichtung nach Anspruch 2, **dadurch gekennzeichnet,** daß das Handstück (2) mit einem Luftführungskanal versehen ist, welcher die Innenbohrung des Röhrchens (6) mit einem an dem dem Antrieb zuweisenden Ende angeordneten Vakuumanschluß (4) verbindet.

4. Einrichtung nach einem der Ansprüche 1 bis 3, **dadurch gekennzeichnet,** daß die Saugpipette (5) als an ihrem freien Ende (7) offenes Röhrchen (6) ausgebildet ist, dessen Endbereich teilweise seitlich entfernt und der stehengebliebene Teil (10) zur Achse hin eingebogen ist.

5. Einrichtung nach einem der Ansprüche 1 bis 4, **dadurch gekennzeichnet,** daß die Saugpipette (5) exzentrisch gelagert ist.

6. Einrichtung nach Anspruch 1, **dadurch gekennzeichnet,** daß die Saugpipette (5) eine Taumelbewegung beschreibt.

88 113570.1

Fig.1

1

2

3

4

5

Fig.2

Fig.3

Fig.4

6

5

6

6

7

9

8

9

9

10

9

11

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | NL-A-8403019 (VAN DAMME)<br>* Seite 2, Zeile 6 - Seite 2, Zeile 9 *<br>* Seite 8, Zeile 9 - Seite 8, Zeile 29 *<br>* Seite 10, Zeile 11 - Seite 10, Zeile 34 *<br>--- | 1, 3 | A22C25/14 |
| A | US-A-2423299 (DAVIS)<br>* das ganze Dokument *<br>--- | 1, 3 | |
| A,D | GB-A-833422 (NATIONAL RESEARCH DEVELOPMENT)<br>--- | | |
| A | US-A-3720981 (SCHMADER)<br>--- | | |
| A | US-A-3526018 (LOVITT)<br>--- | | |
| A | US-A-3714681 (VAN SNELLENBERG)<br>--- | | |
| A | GB-A-2147190 (SIMON-JOHNSON)<br>----- | | |
| | | | RECHERCHIERTE SACHGEBIETE (Int. Cl.4)<br><br>A22C |

Der vorliegende Recherchenbericht wurde für alle Patentansprüche erstellt

| Recherchenort | Abschlußdatum der Recherche | Prüfer |
|---|---|---|
| DEN HAAG | 13 DECEMBER 1988 | DE LAMEILLIEURE D. |

EPO FORM 1503 03.82 (P0403)